# FASCICULE DE BREVET EUROPEEN

(11) **EP 0 579 549 B1**
(45) Date de publication et mention de la délivrance du brevet: **18.09.1996**
(21) Numéro de dépôt: 93401827.6
(22) Date de dépôt: 15.07.1993
(51) Int. Cl.: B60S 1/34

(54) **Dispositif d'essuie-glace**
Scheibenwischeranlage
Windscreen wiper arrangement

(30) Priorité: 15.07.1992 FR 9208704
(43) Date de publication de la demande: 19.01.1994
(73) Titulaire: VALEO SYSTEMES D'ESSUYAGE, 78180 Montigny-Le-Bretonneux (FR)
(72) Inventeur: Peyret, Xavier, F-63000 Clermont-Ferrand (FR)
(74) Mandataire: Gamonal, Didier

(56) Documents cités:
- GB-A- 2 004 734
- GB-A- 2 188 537

## Description

La présente invention concerne un dispositif d'essuie-glace, notamment pour véhicule automobile.

L'invention concerne plus particulièrement un dispositif d'essuie-glace du type comportant un élément formant bras d'essuie-glace qui est monté articulé sur un élément formant tête d'entraînement, autour d'un axe d'articulation qui s'étend selon une direction sensiblement perpendiculaire à la direction longitudinale de l'essuie-glace.

L'axe d'articulation est associé à un premier des deux éléments et comporte au moins un tronçon de section cylindrique qui est reçu dans un tronçon de palier complémentaire formé dans le second des deux éléments et qui comporte une portion de surface semi-cylindrique dans laquelle le tronçon de l'axe d'articulation peut être introduit selon une direction perpendiculaire à l'axe d'articulation, le second des deux éléments comportant des surfaces de guidage du tronçon de l'axe d'articulation lors de son introduction dans la surface semi-cylindrique concave du tronçon du palier complémentaire, le dispositif comportant un organe élastique qui maintient le tronçon de l'axe d'articulation en contact avec la portion de surface semi-cylindrique ainsi que des moyens de retenue par coopération de forme qui empêchent le dégagement du tronçon de l'axe d'articulation hors du tronçon de palier.

Un exemple de réalisation d'un tel dispositif d'axe d'articulation est illustré dans le document FR-A-2596711 dans lequel le tronçon d'axe d'articulation est sensiblement semi-cylindrique avec une face plate tournée vers l'intérieur du bras d'essuie-glace et dans lequel le tronçon de palier comporte une encoche d'introduction qui présente une section interne de contour semi-cylindrique et de diamètre sensiblement égal à celui du tronçon de l'axe d'articulation et une section ouverte vers l'extérieur délimitée par des faces plates qui sont séparées d'une distance inférieure au diamètre du tronçon de l'axe d'articulation et légèrement supérieure à la dimension de celui-ci mesurée perpendiculairement à la face plate, le tronçon de l'axe d'articulation étant monté dans la section intérieure de l'encoche, le tronçon de l'axe d'articulation étant monté dans la section intérieure de l'encoche.

Une telle conception est avantageuse en ce qu'elle permet de réaliser d'une manière économique les deux éléments par moulage en matière plastique mais elle ne donne pas entièrement satisfaction du point de vue fonctionnel dans la mesure où il existe un risque important d'échappement du tronçon de l'axe d'articulation hors de son encoche.

Afin de remédier à cet inconvénient, la présente invention propose un dispositif d'essuie-glace du type mentionné précédemment tel que divulgué dans FR-A-2 596 711 et défini dans le préambule de la revendication 1, caractérisé en ce les moyens de retenue comportent une tige de retenue qui s'étend axialement dans le prolongement du tronçon de l'axe d'articulation tout en étant excentrée par rapport à l'axe dudit tronçon et en ce que la largeur de la fente est dimensionnée pour permettre l'introduction de la tige de retenue dans la fente lorsque le second élément formant le bras occupe une position angulaire determinée par rapprt à la tête d'entraînement.

Selon différents modes de réalisation de l'invention :
- le bec de retenue coopère avec une portion de surface du second élément pour délimiter une fente d'introduction de la tige de retenue, le diamètre de la tige de retenue étant supérieur à la largeur de cette fente d'introduction et la tige de retenue comportant un méplat de manière à ne permettre l'introduction de la tige dans la fente d'introduction, et ainsi l'introduction du tronçon de l'axe d'articulation dans le tronçon de palier, que pour une position angulaire relative déterminée des deux éléments ;
- le tronçon de palier comporte deux tronçons de surfaces planes parallèles de guidage qui prolongent la portion de surface semi-cylindrique et qui définissent la direction d'introduction du tronçon de l'axe d'articulation dans le tronçon de palier, le bec de retenue s'étendant transversalement en saillie depuis l'une de ces deux portions de surfaces de guidage en direction de l'autre portion de surface de guidage avec laquelle il délimite la fente d'introduction ;
- les moyens d'articulation et de retenue des deux éléments présentent une symétrie de réalisation par rapport à un plan médian perpendiculaire à l'axe d'articulation ;
- l'axe d'articulation comporte deux tronçons agencés symétriquement de part et d'autre du plan de symétrie et les moyens de retenue sont agencés entre les deux tronçons de l'axe d'articulation ;
- le premier élément comporte deux joues latérales parallèles entre lesquelles s'étend l'axe d'articulation;
- le second élément comporte deux faces latérales prévues pour être reçues entre les joues latérales du premier élément ;
- les deux éléments sont réalisés par moulage en matière plastique ;
- le premier élément est constitué par la tête d'entraînement tandis que le bras d'essuie-glace constitue le second élément ;

D'autres caractéristiques et avantages de l'invention apparaîtront à la lecture de la description détaillée qui va suivre pour la compréhension de laquelle on se reportera aux dessins annexés dans lesquels :
- La figure 1 est une vue schématique en perspective illustrant les deux portions d'extrémité des deux éléments constitutifs d'un dispositif d'essuie-glace réalisé conformément aux enseignements de l'invention ;
- la figure 2 est une vue en coupe longitudinale par un plan de symétrie médian et perpendiculaire à l'axe d'articulation des deux éléments illustrés à la figure 1 et sur laquelle les deux éléments sont représentés en position normale de fonctionnement de l'essuie-glace ;
- la figure 3 est une vue similaire à celle de la figure 2 illustrant la phase d'assemblage des deux éléments ; et
- la figure 4 est une vue similaire à celle de la figure 2 illustrant les deux éléments dans une position stable dite d'entretien.

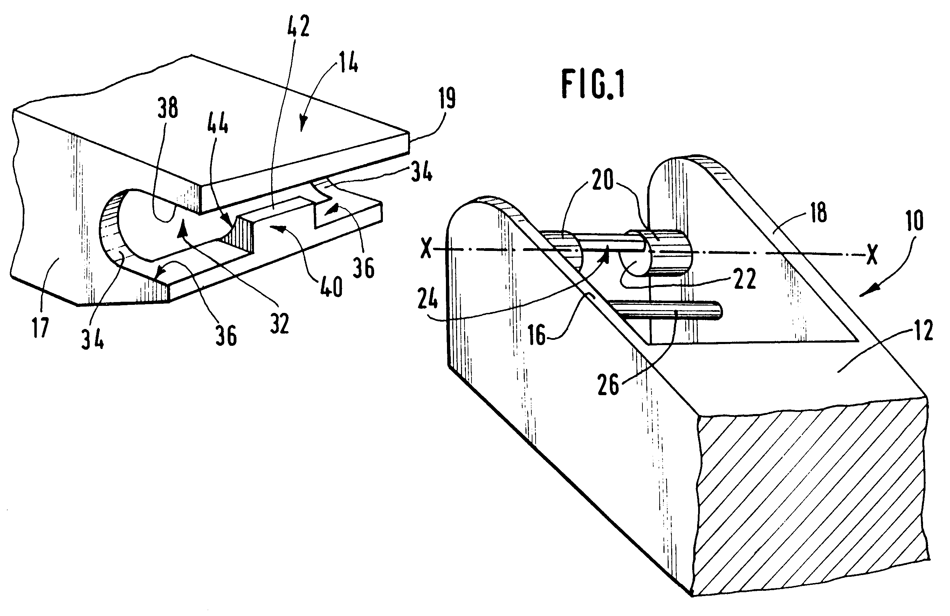

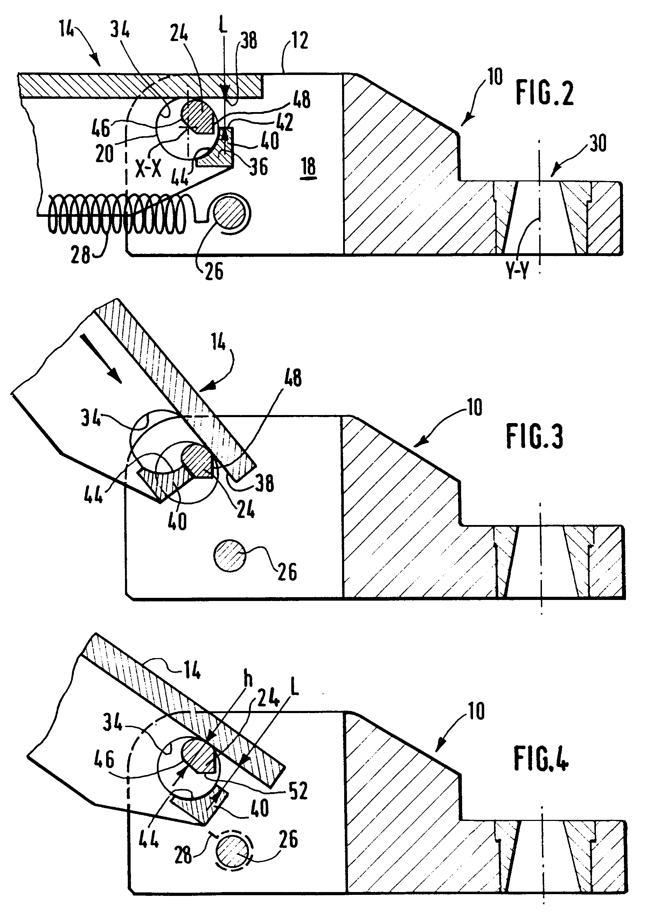

On a représenté sur les figures 1 et 2 une tête d'entraînement 10 d'un essuie-glace à l'extrémité 12 de laquelle est montée articulée, autour d'un axe X-X, la portion d'extrémité 14 d'un bras d'essuie-glace.

L'articulation du bras d'essuie-glace 14 par rapport à la tête d'entraînement 10 est réalisée de la manière suivante.

La portion d'extrémité 12 de la tête d'entraînement 10 comporte deux joues latérales parallèles 16 et 18 entre lesquelles s'étendent deux tronçons cylindriques coaxiaux 20 constituant l'axe d'articulation proprement dit.

Les deux tronçons d'axe d'articulation 20 se terminent par des faces radiales opposées 22 entre lesquelles s'étend axialement une tige de retenue 24.

La tête d'entraînement 10 comporte également une barre 26 pour l'accrochage d'un ressort hélicoïdal de traction 28, la barre 26 s'étendant entre les joues 16 et 18 parallèlement à l'axe X-X.

La tête d'entraînement 10 comporte également des moyens 30 pour la relier à un arbre d'entraînement en rotation alternative autour d'un axe Y-Y sensiblement perpendiculaire à l'axe d'articulation X-X.

La tête d'entraînement 10 est par exemple réalisée par moulage en matière plastique.

La portion d'extrémité 14 du bras d'essuie-glace est réalisée sous la forme d'une pièce massive moulée en matière plastique dont les faces latérales parallèles 17 et 19 sont prévues pour coopérer avec les faces internes des joues 16 et 18.

La portion 14 comporte un évidement 32 qui délimite deux tronçons de paliers d'articulation 34 , agencés symétriquement par rapport au plan médian du bras d'essuie-glace et en vis à vis des tronçons 20 de l'axe d'articulation.

Chaque tronçon de palier 34 est pour l'essentiel constitué par une portion de surface semi-cylindrique concave qui est prévue pour coopérer avec un tronçon d'axe d'articulation 20 correspondant afin d'assurer un mouvement d'articulation en pivotement autour de l'axe géométrique X-X.

Le logement ou évidement 32 se prolonge longitudinalement, à partir de la portion de surface semi-cylindrique 34 par deux surfaces planes de guidage parallèles et opposées 36 et 38.

Les deux surfaces de guidage 36 et 38 sont parallèles entre elles et parallèles à l'axe géométrique de la portion de surface semi-cylindrique concave 34.

Etant donné la complémentarité de formes et de dimensions entre les tronçons 20 de l'axe d'articulation et les deux tronçons de paliers 34, il est possible d'introduire des tronçons d'axe d'articulation 20 pour les amener en contact avec les portions de surface concave 34 selon une direction perpendiculaire à l'axe d'articulation X-X.

Dans la position normale de fonctionnement illustrée à la figure 2, la surface cylindrique convexe externe des tronçons de l'axe d'articulation est maintenue en contact avec la surface semi-cylindrique concave 34 par l'action du ressort hélicoïdal de traction 28 qui est agencé entre la tête d'entraînement 10 et le bras d'essuie-glace 14.

La portion d'extrémité 14 du bras d'essuie-glace comporte également un bec de retenue 40 qui s'étend transversalement en saillie depuis la portion de surface plane de guidage 36 en direction de la portion de surface plane de guidage.

Le bec de retenue est réalisé venu de moulage et comporte une face plane supérieure 42 qui s'étend parallèlement à la surface plane de guidage 38 et qui délimite avec cette dernière une fente de largeur L.

Le bec de retenue 40 comporte également une face interne qui est une portion de surface cylindrique concave 44 centrée sur l'axe de la portion semi-cylindrique 34.

Comme on peut le constater sur les figures, la tige de retenue 24 est excentrée par rapport à l'axe X-X des tronçons 20 de l'axe d'articulation.

La tige de retenue 24 présente une section générale circulaire dont le diamètre est supérieur à la largeur L de la fente.

Mais la section transversale de la tige de retenue 24 n'est pas entièrement circulaire. En effet, la tige de retenue 24 comporte un premier méplat 46 qui est tel que la hauteur "h" de la section transversale de la tige de retenue,mesurée selon la normale à ce méplat, est légèrement inférieure à la largeur L de la fente de manière à permettre l'introduction de la tige de retenue 24 dans la fente lorsque le bras d'essuie-glace 14 occupe une position angulaire déterminée par rapport à la tête d'entraînement 10.

Cette position est illustrée à la figure 3 et correspond à la position de montage, ou de démontage du balai d'essuie-glace 14 sur la tête d'entraînement 10.

En effet, lorsque le bras d'essuie-glace 14 occupe la position angulaire déterminée illustrée à la figure 3, il est possible d'introduire la tige de retenue 14 dans la fente délimitée par les faces en vis à vis 42 et 38 puis d'amener, en fin de course d'introduction, les tronçons 20 de l'axe d'articulation en appui dans les portions de palier 34 (figure 4).

A partir de cette position d'introduction, il est ensuite possible de faire pivoter le balai d'essuie-glace 14 autour de l'axe X-X, dans le sens anti-horaire en cosnidérant la figure 3, pour l'amener dans sa position normale de fonctionnement illustrée à la figure 2.

Après accrochage du ressort hélicoïdal de traction 28, les tronçons 20 de l'axe d'articulation sont en appui dans les portions de paliers semi-cylindriques 34.

Un dégagement accidentel des tronçons 20 hors des portions de paliers 34 est rendu impossible du fait de la présence du bec de retenue 40 qui s'étend transversalement en regard d'une face de retenue 48 constituée par un second méplat formé sur la tige de retenue 24.

On a illustré à la figure 4 la position d'équilibre du bras d'essuie-glace 14 sur la tête d'entraînement 10 correspondant à une position basculée de celui-ci également appelée position d'entretien dans laquelle il est possible d'intervenir, par exemple pour procéder au remplacement d'une lame d'essuyage (non représentée).

Dans cette position, tout dégagement accidentel des tronçons 20 de l'axe d'articulation hors des paliers 34 est également impossible car le bec de retenue 40 s'étend devant une portion en vis-à-vis relative de retenue constituée par un troisième méplat 52.

## Revendications

1. Dispositif d'essuie-glace, notamment pour véhicule automobile, comportant un élément (14) formant bras d'essuie-glace qui est monté articulé sur un élément (10, 12) formant tête d'entraînement au moyen d'un axe d'articulation (X-X, 20) associé à un premier (10) des deux éléments (10, 14) et dont au moins un tronçon (20) de section cylindrique est reçu dans un tronçon de palier complémentaire formé dans le second (14) des deux éléments et qui comporte une portion de surface semi-cylindrique concave (34) dans laquelle le tronçon de l'axe d'articulation (20) peut être introduit selon une direction perpendiculaire à l'axe d'articulation (X-X), le second (14) des deux éléments (10,14) comportant des surfaces de guidage (36,38) du tronçon de l'axe d'articulation (20) lors de son introduction dans la surface semi-cylindrique concave (34) du tronçon du palier complémentaire, un bec de retenue (40) étant formé sur le second élément (14) en s'étendant en vis-à-vis de la tige de retenue (24), ledit bec comportant une surface de guidage (42) délimitant avec unes des surfaces de guidage (36,38) du second élément une fente comportant un organe élastique (28) qui maintient le tronçon de l'axe d'articulation (20) en contact avec la portion de surface semi-cylindrique (34), et comportant des moyens de retenue par coopération de formes qui empêchent le dégagement du tronçon de l'axe d'articulation (20) hors du tronçon de palier (34), caractérisé en ce que les moyens de retenue comportent une tige de retenue (24) qui s'étend axialement dans le prolongement du tronçon de l'axe d'articulation (20) tout en étant excentrée par rapport à l'axe (X-X) dudit tronçon et en ce que la largeur (L) de la fente est dimensionnée pour permettre l'introduction de la tige de retenue (24) dans la fente lorsque le bras second élément formant le (14) occupe une position angulaire determinée par rapprt à la tête d'entraînement.

2. Dispositif d'essuie-glace selon la revendication 1, caractérisé en ce que le bec de retenue (40) coopère avec une portion de surface (38) du second élément (14) pour délimiter une fente d'introduction de la tige de retenue (24), en ce que le diamètre de la tige de retenue est supérieur à la largeur de ladite fente, et en ce que la tige de retenue (24) comporte un méplat (46) de manière à ne permettre l'introduction de la tige (24) dans ladite fente, et ainsi l'introduction du tronçon de l'axe d'articulation (20) dans le tronçon de palier (34), que pour une position angulaire relative déterminée des deux éléments (10, 14).

3. Dispositif d'essuie-glace selon la revendication 2, caractérisé en ce que le tronçon de palier comporte deux portions de surfaces planes parallèles de guidage (36, 38) qui prolongent la portion de surface semi-cylindrique (34) et qui définissent la direction d'introduction du tronçon de l'axe d'articulation (20) dans le tronçon de palier, et en ce que le bec de retenue (40) s'étend transversalement en saillie depuis l'une (36) de ces deux portions de surfaces de guidage (36, 38) en direction de l'autre portion de surface de guidage (38) avec laquelle il délimite ladite fente.

4. Dispositif d'essuie-glace selon l'une quelconque des revendications précédentes, caractérisé en ce que les moyens d'articulation et de retenue des deux éléments (10, 14) présentent une symétrie de réalisation par rapport à un plan médian perpendiculaire à l'axe d'articulation (X-X).

5. Dispositif d'essuie-glace selon la revendication 4, caractérisé en ce que l'axe d'articulation comporte deux tronçons (20) agencés symétriquement de part et d'autre du plan de symétrie et en ce que les moyens de retenue sont agencés entre les deux tronçons de l'axe d'articulation.

6. Dispositif d'essuie-glace selon la revendication 5, caractérisé en ce que le premier élément (10, 12) comporte deux joues latérales parallèles (16, 18) entre lesquelles s'étend l'axe d'articulation.

7. Dispositif d'essuie-glace selon la revendication 6, caractérisé en ce que le second élément comporte deux faces latérales parallèles (17, 19) prévues pour être reçues entre lesdites joues latérales (16, 18) du premier élément.

8. Dispositif d'essuie-glace selon l'une quelconque des revendications précédentes, caractérisé en ce que les deux éléments sont réalisés par moulage en matière plastique.

9. Dispositif d'essuie-glace selon l'une quelconque des revendications précédentes, caractérisé en ce que la tête d'entraînement (10) de l'essuie-glace constitue ledit premier élément.

## Claims

1. A windscreen wiper device, especially for a motor vehicle, comprising a component (14) forming a windscreen wiper arm which is flexibly mounted on a component (10, 12) forming a drive head by means of a hinge pin (X-X, 20) associated with a first (10) of the two components (10, 14), and at least one section (20) of which, having a cylindrical section, is received in a complementary bearing section formed in the second (14) of the two components and which comprises a concave semi-cylindrical surface portion (34) into which the section of the hinge pin (20) can be introduced in a direction perpendicular to the axis of articulation (X-X), the second (14) of the two components (10, 14) comprising guideways (36, 38) for the section of the hinge pin (20) during its introduction into the concave semi-cylindrical surface (34) of the complementary bearing section, a retention lug (40) being formed on the second component (14) extending opposite the retention rod (24), the said lug comprising a guideway (42) delimiting a slot with one of the guideways (36, 38) of the second component, comprising an elastic member (28) which keeps the section of the hinge pin (20) in contact with the semi-cylindrical surface portion (34), and comprising retention means by cooperation of shapes which prevent the detachment of the section of the hinge pin (20) from the bearing section (34),
**characterised in that** the retention means comprise a retention rod (24) which extends axially into the extension of the section of the hinge pin (20), all the time being eccentric in relation to the axis (X-X) of the said section,
**and in that** the width (L) of the slot is dimensioned in such a manner as to enable the introduction of the retention rod (24) into the slot when the second element forming the arm (14)^{*)} occupies a determined angular position in relation to the drive head.

2. A windscreen wiper device according to Claim 1,
**characterised in that** the retention lug (40) cooperates with a surface portion (38) of the second component (14) to delimit a slot for the introduction of the retention rod (24),
**in that** the diameter of the retention rod is greater than the width of said slot,
**and in that** the retention rod (24) comprises a flat surface (46) so as to allow the introduction of the rod into said slot, and thus the introduction of the section of the hinge pin (20) into the bearing section (34), only for a determined relative angular position of the two components (10, 14).

3. A windscreen wiper device according to Claim 2,
**characterised in that** the bearing section comprises two parallel plane guideway portions (36, 38) which extend the semi-cylindrical surface portion (34) and which define the direction of introduction of the section of the hinge pin (20) into the bearing section,
**and in that** the retention lug (40) extends transversally as a projection from one (36) of these two guideway portions (36, 38) towards the other guideway portion (38) with which it delimits the said slot.

4. A windscreen wiper device according to any one of the preceding Claims,
**characterised in that** the articulation and retention means of the two components (10, 14) have a symmetry of construction with respect to a median plane perpendicular to the axis of articulation (X-X).

5. A windscreen wiper device according to Claim 4,
**characterised in that** the hinge pin comprises two sections (20) disposed symmetrically on either side of the plane of symmetry,
**and in that** the retention means are disposed between the two sections of the hinge pin.

6. A windscreen wiper device according to Claim 5,
**characterised in that** the first component (10, 12) comprises two parallel lateral cheeks (16, 18), between which the hinge pin extends.

7. A windscreen wiper device according to Claim 6,
**characterised in that** the second component comprises two parallel lateral faces (17, 19) designed to be received between said lateral cheeks (16, 18) of the first component.

8. A windscreen wiper device according to any one of the preceding Claims,
**characterised in that** the two components are made by moulding from plastic material.

9. A windscreen wiper device according to any one of the preceding Claims,
**characterised in that** the drive head (10) of the windscreen wiper constitutes said first component.

## Patentansprüche

1. Scheibenwischeranlage, insbesondere für Kraftfahrzeuge, bestehend aus einem als Scheibenwischerarm gestalteten Element (14), das schwenkbar an einem als Antriebskopf gestalteten Element (10, 12) um eine Gelenkachse (X-X, 20) gelagert ist, die zu einem ersten (10) der beiden Elemente (10, 14) gehört und von der wenigstens ein Teilstück (20) mit zylindrischem Querschnitt in ein formschlüssiges Lagerteilstück eingesetzt ist, das in das zweite (14) der beiden Elemente eingearbeitet ist und eine konkave halbzylindrische Teilfläche (34) umfaßt, in die das Gelenkachsenteilstück (20) entlang einer Richtung eingeführt werden kann, die senkrecht zur Gelenkachse (X-X) verläuft, wobei das zweite (14) der beiden Elemente (10, 14) Führungsflächen (36, 38) für das Gelenkachsenteilstück (20) bei seiner Einführung in die konkave halbzylindrische Fläche (34) des formschlüssigen Lagerteilstücks enthält, wobei eine Haltenase (40) an dem zweiten Element (14) vorgesehen ist, die sich gegenüber dem Haltestift (24) erstreckt und die eine Führungsfläche (42) umfaßt, welche zusammen mit einer der Führungsflächen (36, 38) des zweiten Elements einen Schlitz begrenzt, und wobei die Scheibenwischeranlage ein elastisches Organ (28) umfaßt, welches das Gelenkachsenteilstück (20) in Anlage an die halbzylindrische Teilfläche hält (34), sowie Haltemittel, die durch formschlüssiges Zusammenwirken das Heraustreten des Gelenkachsenteilstücks (20) aus dem Lagerteilstück (34) verhindern, **dadurch gekennzeichnet**, daß die Haltemittel einen Haltestift (24) umfassen, der sich axial in der Verlängerung des Gelenkachsenteilstücks (20) erstreckt, wobei er im Verhältnis zur Achse (X-X) des besagten Teilstücks außermittig versetzt ist, und daß die Breite (L) des Schlitzes so bemessen ist, daß sie die Einführung des Haltestifts (24) in den Schlitz ermöglicht, wenn das als Scheibenwischerarm gestaltete zweite Element (14) eine bestimmte Winkelposition im Verhältnis zum Antriebskopf einnimmt.

2. Scheibenwischeranlage nach Anspruch 1, **dadurch gekennzeichnet,** daß die Haltenase (40) mit einer Teilfläche (38) des zweiten Elements (14) zusammenwirkt, um einen Einführungsschlitz für den Haltestift (24) zu begrenzen, daß der Durchmesser des Haltestifts größer als die Breite dieses Einführungsschlitzes ist und daß der Haltestift (24) eine Anflachung (46) umfaßt, so daß die Einführung des Haltestifts (24) in den besagten Einführungsschlitz sowie die Einführung des Gelenkachsenteilstücks (20) in das Lagerteilstück (34) nur bei einer bestimmten relativen Winkelposition der beiden Elemente (10, 14) ermöglicht wird.

3. Scheibenwischeranlage nach Anspruch 2, **dadurch gekennzeichnet,** daß das Lagerteilstück zwei parallele ebene Führungsteilflächen (36, 38) umfaßt, welche die halbzylindrische Teilfläche (34) verlängern und die Richtung für die Einführung des Gelenkachsenteilstücks (20) in das Lagerteilstück bestimmen, und daß sich die Haltenase (40) quer vorspringend von einer (36) diesen beiden Führungsteilflächen (36, 38) aus in Richtung der anderen Führungsteilfläche (38) erstreckt, mit der sie den besagten Schlitz begrenzt.

4. Scheibenwischeranlage nach einem der vorangehenden Ansprüche, **dadurch gekennzeichnet**, daß die Gelenk- und Haltemittel der beiden Elemente (10, 14) eine Ausführungssymmetrie im Verhältnis zu einer Mittelebene aufweisen, die senkrecht zur Gelenkachse (X-X) verläuft.

5. Scheibenwischeranlage nach Anspruch 4, **dadurch gekennzeichnet,** daß die Gelenkachse zwei Teilstücke (20) umfaßt, die symmetrisch beiderseits der Symmetrieebene angeordnet sind, und daß die Haltemittel zwischen den beiden Gelenkachsenteilstücken angeordnet sind.

6. Scheibenwischeranlage nach Anspruch 5, **dadurch gekennzeichnet,** daß das erste Element (10, 12) zwei parallele Seitenteile (16, 18) umfaßt, zwischen denen sich die Gelenkachse erstreckt.

7. Scheibenwischeranlage nach Anspruch 6, **dadurch gekennzeichnet,** daß das zweite Element zwei parallele Seitenflächen (17, 19) umfaßt, die für die Aufnahme zwischen den besagten Seitenteilen (16, 18) des ersten Elements vorgesehen sind.

8. Scheibenwischeranlage nach einem der vorangehenden Ansprüche, **dadurch gekennzeichnet**, daß die beiden Elemente als Kunststoff-Formteile ausgeführt sind.

9. Scheibenwischeranlage nach einem der vorangehenden Ansprüche, **dadurch gekennzeichnet**, daß der Antriebskopf (10) des Scheibenwischers das besagte erste Element bildet.
